# EUROPEAN PATENT SPECIFICATION

(11) **EP 2 288 881 B1**
(45) Date of publication and mention of the grant of the patent: **22.02.2012**
(21) Application number: 09731413.2
(22) Date of filing: 16.04.2009
(51) Int. Cl.: G01F 1/64, A01J 5/01

(54) **SYSTEM, METHOD AND COMPUTER PROGRAM FOR MEASURING A MILK FLOW AT A MILKING INSTALLATION**
SYSTEM, VERFAHREN UND COMPUTERPROGRAMM GEEIGNET ZUR MESSUNG EINES MILCHSTROMS IN EINER MELKEINRICHTUNG
SYSTÈME, PROCÉDÉ ET LOGICIEL DE MESURE DU DÉBIT DE LAIT DANS UNE INSTALLATION DE TRAITE

(30) Priority: 08.04.2008 US 64994
(43) Date of publication of application: 02.03.2011
(73) Proprietor: E.N.G.S. Systems, Ltd., 12000 Rosh Pinna (IL)
(72) Inventor: PHILLPOT, Nicholas, 19350 D.N. Yizrael (IL)
(74) Representative: Fleuchaus, Michael A.
(86) International application number: PCT/IL2009/000415
(87) International publication number: WO 2009/125412

(56) References cited:
- EP-A- 0 795 268
- GB-A- 2 124 877
- JP-A- 57 087 610
- US-A- 4 922 855

## Description

### FIELD OF THE INVENTION

This invention relates to measuring milk flow at a milking installation.

### BACKGROUND OF THE INVENTION

Automation of the milking of dairy cattle requires automatic determination of the volume of milk produced by each animal milked at a milking installation. However, automatic volume determination is made difficult due to the fact that milk flow from an animal being milked is pulsatile in nature and is not uniform. The problem is compounded by the fact that the milk is not homogenous, but it has many phases consisting of a liquid phase and a foam phase. One method for measuring milk flow uses a measuring chamber in which either the weight of the contents is determined with a tipping cart or the volume is determined with a floater or sensor electrodes. Milk enters the chamber in small portions and the volume or weight of each portion is measured. The chamber is then emptied before the next portion enters the chamber. Devices which measure milk flow in a conduit using ultrasound or infrared sensors are also known.

Devices for the measurement of flow meters are disclosed, for example, in U.S. Pat. Nos. 5,083,459 and 7,155,971, and in EP 0 315 201 A2.

EP 0,795,268, US4,922,855 and GB2,124,877 disclose systems for determining a flow rate of milk flow in a conduit in which spaced apart electrodes are disposed. An electric current meter generates a signal indicative of the electrical current between the electrodes, and a flow rate is determined from the amplified signal. None of these publications teach continuously adjusting the gain of the amplifier to maintain the amplified signal in a predetermined range.

JP 57,087,610 discloses a system comprising an enzyme sensor in which the signal generated is amplified, and the gain of the amplifier is continuously adjusted to maintain the signal in a predetermined range. Determination of the amplifier gain is not determined from a recent history of the signal.

### SUMMARY OF THE INVENTION

The present invention provides a system for measuring milk flow at a milking installation. The
system includes a conduit in which milk received from an animal being milked at the installation flows. A first electrode and a second electrode arc positioned inside the milk conduit across which a fixed voltage is applied. Milk flowing in the conduit forms a resistive element between the electrodes. Electric current in the milk between the two electrodes is detected by an ammeter, amplified by an amplifier, and then stored in a memory. A processor is configured to determine the current flow rate of milk in the conduit between the electrodes. Typically, the flow rate is determined from a look up table that provides the milk flow rate from the stored amplified current and the current value of the gain of the amplifier. The current flow rate is stored in the memory, together with the time at which the flow rate was measured. The processor is further configured to determine the time averaged value of the amplified current over a recent time window. If the determined average is not within a predetermined range, the processor determines a gain of the amplifier that would have brought this time average into the predetermined range. The processor then resets the gain of the amplifier to the determined gain in order to bring the time average of the amplified current over subsequent time windows into the predetermined range.

Thus, in its first aspect, the invention provides a system for determining a flow rate of milk collected at a milking installation, comprising:
**(a)** a conduit;
**(b)** a first electrode and a second electrode, the first and second electrodes being disposed in an interior lumen of the conduit, and spaced apart in the lumen;
**(c)** a power supply providing a voltage across the first and second electrodes;
**(d)** an electric current meter determining an electrical current between the first and second electrodes, the electric current being indicative of a volume of milk in the conduit between the first and second electrodes;
**(e)** an amplifier having a selectable gain amplifying an output of the amp meter;
**(f)** an analogue to digital converter sampling an output of the amplifier and generating a digital signal;
**(g)** a memory storing an output of the analog to digital converter; and
**(h)** a processor configured to :
   calculate a flow of milk in the conduit using one or more output samples of the analogue to digital converter;
   calculate an average of the n most recent output values from the analog to digital converter, where n is an integer;
   calculate the amplifier gain that would bring the average of the last n output values into a predetermined range when the calculated time average not in the predetermined range; and
   adjust the amplifier gain to the calculated gain.

The processor may further be configured to calculate a cumulative volume flow in the conduit using one or more of the calculated flows.

In another of its aspects, the invention provides a processor for use in a system for determining a flow rate of milk collected at a milking installation, the milking installation comprising:
**(a)** a conduit;
**(b)** a first electrode and a second electrode, the first and second electrodes being disposed in an interior lumen of the conduit, and spaced apart in the lumen;
**(c)** a power supply providing a voltage across the first and second electrodes;
**(d)** an electric current meter determining an electrical current between the first and second electrodes, the electric current being indicative of a volume of milk in the conduit between the first and second electrodes;
**(e)** an amplifier having a selectable gain amplifying an output of the amp meter;
**(f)** an analogue to digital converter sampling an output of the amplifier and generating a digital signal;
**(g)** a memory storing an output of the analog to digital converter; wherein the processor is configured to :
   calculate a flow of milk in the conduit using one or more output samples of the analogue to digital converter;
   calculate an average of the n most recent output values from the analog to digital converter, where n is an integer;
   calculate the amplifier gain that would bring the average of the last n output values into a predetermined range when the calculated time average not in the predetermined range; and
   adjust the amplifier gain to the calculated gain.

The invention further provides a method for determining a flow rate of milk collected at a milking installation, the milking installation comprising:
**(a)** a conduit;
**(b)** a first electrode and a second electrode, the first and second electrodes being disposed in an interior lumen of the conduit, and spaced apart in the lumen;
**(c)** a power supply providing a voltage across the first and second electrodes;
**(d)** an electric current meter determining an electrical current between the first and second electrodes, the electric current being indicative of a volume of milk in the conduit between the first and second electrodes;
**(e)** an amplifier having a selectable gain amplifying an output of the amp meter;
**(f)** an analogue to digital converter sampling an output of the amplifier and generating a digital signal;
**(g)** a memory storing an output of the analog to digital converter; and wherein the method comprises :
   calculating a flow of milk in the conduit using one or more output samples of the analogue to digital converter;
   calculating an average of the n most recent output values from the analog to digital converter, where n is an integer;
   calculating the amplifier gain that would bring the average of the last n output values into a predetermined range when the calculated time average not in the predetermined range; and
   adjusting the amplifier gain to the calculated gain.

The system according to the invention may be a suitably programmed computer. Likewise, the invention contemplates a computer program being readable by a computer for executing the method of the invention. The invention further contemplates a machine-readable memory tangibly embodying a program of instructions executable by the machine for executing the method of the invention.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** shows a system for measuring milk flow at a milking installation in accordance with one embodiment of the invention;
**Fig. 2** shows the milk flow measuring system of Fig. 1 in greater detail; and
**Fig. 3** shows a flow chart for adjusting the gain of the amplifier carried out by the processor of the system of Figs. 1 and 2.

### DETAILED DESCRIPTION OF EMBODIMENTS

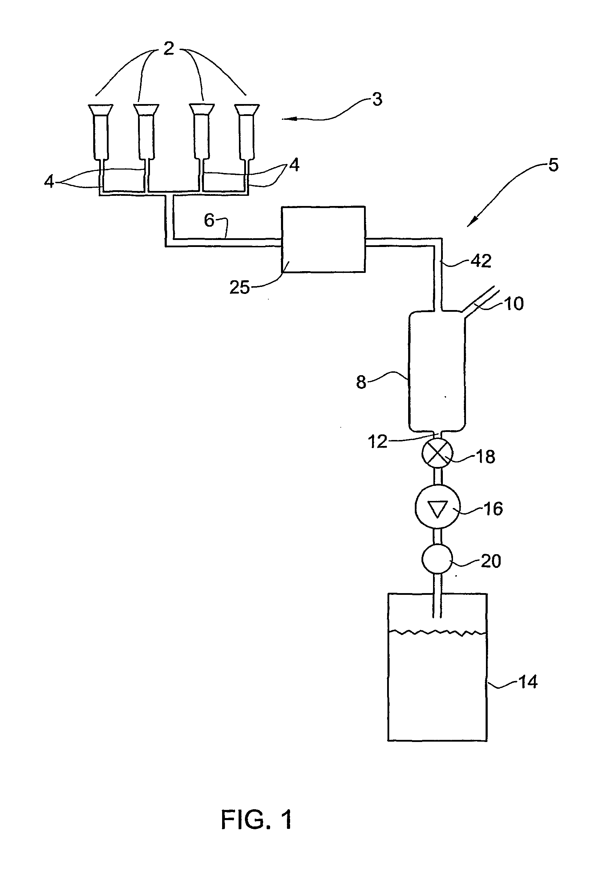

Fig. 1 shows a system, generally indicated by **25** for measuring milk flow at a milking installation **5** in accordance with one embodiment of the invention. The milking installation **5** includes one or more milking apparatuses for milking an animal. Each milking apparatus includes a cluster **3** of four teat cups **2** configured to be connected to the teats of an animal to be milked. Milk received in the teat cups **2** is conducted via milk discharge tubes **4** and a conduit **6** to a milk glass **8**. As milk flows in the conduit **6**, the flow of milk is monitored by the flow measuring system **25**, as explained below. The milk glass **8** is also connected to a vacuum line **10** for generating a vacuum in the milk conduction system consisting of the teat cups **2**, the milk discharge tubes **4**, the milk conduit **6** and milk glass **8**, in order to maintain the teat cups **2** on the teats of the animal being milked, and for conducting milk from the teat cups **2** to the milk glass **8** where air present in the milk is separated from the milk. The milk received in the milk glass **8** is subsequently conducted through an exit conduit **12** to a bulk milk tank **14** under the influence of a pump **16**. The exit conduit **12** is provided with a valve **18**, and a non-return valve **20**.

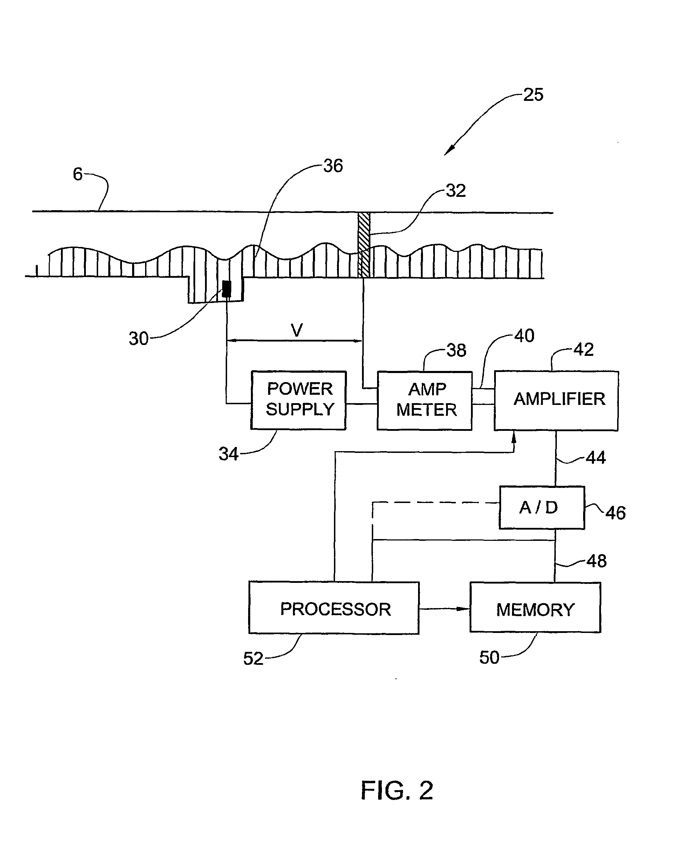

Fig. 2 shows the milk flow measuring system **25**, in accordance with one embodiment of the invention. The system **25** includes a first electrode **30** and a second electrode **32**. The electrodes **30** and **32** are positioned inside the milk conduit **6**. A fixed voltage V is applied across the electrodes **30** and **32** by a power supply **34**. Milk **36** flowing in the conduit **6** forms a resistive element between the electrodes **30** and **32**. Electric current in the milk between the two electrodes **30** and **32** is detected by an analogue amp meter **38**. The output signal **40** of the amp meter **38** is amplified by an analogue amplifier **42** having a selectable gain. The amplified signal **44** is digitized by an analogue to digital converter **46**. The output **48** of the A/D converter **46** is stored in a memory **50** and is simultaneously input to a processor **52**.

The processor **52** is configured to determine the current flow rate of milk in the conduit **6** between the electrodes **30** and **32** from the current value of the output **48** from the A/D converter **46**. Typically, the flow rate is determined from a look up table that provides the milk flow rate from the output **48** and the current value of the gain of the amplifier **42**. The current flow rate is stored in the memory **50**, together with the time at which the flow rate was measured. The processor **52** is also configured to access the memory **50** over a recent time period and determined the cumulative volume of milk that flowed in the conduit **6** during the time period from the flow rates measured during the time period.

In accordance with the invention, the processor **52** is further configured to access the memory **50** and to determine the time averaged value of the output **48** over a recent time window consisting of the n most recent values of the signal **48**. If the determined average is not within a predetermined range, the processor determines a gain of the amplifier **42** that would have brought this time average into the predetermined range. The processor **52** is further configured to reset the gain of the amplifier **42** to the determined gain in order to bring the time average of the output **48** over subsequent time windows into the predetermined range.

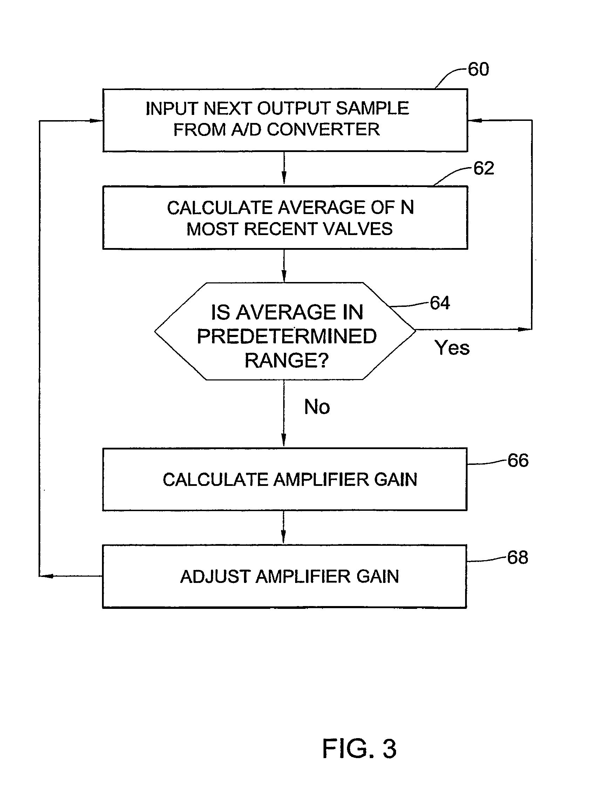

Fig. 3 shows a flow chart for adjusting the gain of the amplifier **42** carried out by the processor **52**. In step **60**, the next output sample from the A/D converter **46** is input to the processor **52** and to the memory **50**. In step **62**, the average of the n most recent output values from the A/D converter is calculated, where n is an integer. Then, in step **64** it is determined whether the calculated time average is in the predetermined range. If yes, then the process returns to step **60** with the next output value from the A/D converter being input to the processor **52** and the memory **50**. If no, then in step **66** the processor calculates the amplifier gain that would have brought the average of the last n output values into the predetermined range, and in step **68** the processor adjusts the amplifier gain to the calculated gain. The process then returns to step **60** with the next output value from the A/D converter being input to the processor **52** and the memory **50**.

## Claims

1. A system for determining a flow rate of milk collected at a milking installation, comprising:
(a) a conduit (6);
(b) a first electrode (30) and a second electrode (32), the first and second electrodes being disposed in an interior lumen of the conduit, and spaced apart in the lumen;
(c) a power supply (34) providing a voltage across the first and second electrodes;
(d) an electric current meter (38) determining an electrical current between the first and second electrodes, the electric current being indicative of a volume of milk in the conduit between the first and second electrodes;
(e) an amplifier (42) having a selectable gain amplifying an output of the electric current meter;
(f) an analogue to digital converter (46) sampling an output of the amplifier and generating a digital signal;
(g) a memory (50) storing an output of the analog to digital converter; and
(h) a processor (52) configured to:
calculate a flow of milk in the conduit using one or more output samples of the analogue to digital converter;
**characterized in that** the processor is further configured to:
calculate an average of the n most recent output values from the analog to digital converter, where n is an integer;
calculate the amplifier gain that would bring the average of the last n output values into a predetermined range when the calculated time average is not in the predetermined range; and
adjust the amplifier gain to the calculated gain.

2. The system according to Claim 1 wherein the processor is further configured to calculate a cumulative volume flow in the conduit using one or more of the calculated flows.

3. Use of a processor in a system for determining a flow rate of milk collected at a milking installation, the milking installation comprising:
(a) a conduit (6);
(b) a first electrode (30) and a second electrode (32), the first and second electrodes being disposed in an interior lumen of the conduit, and spaced apart in the lumen;
(c) a power supply (34) providing a voltage across the first and second electrodes;
(d) an electric current meter (38) determining an electrical current between the first and second electrodes, the electric current being indicative of a volume of milk in the conduit between the first and second electrodes;
(e) an amplifier (42) having a selectable gain amplifying an output of the electric current meter,
(f) an analogue to digital converter (46) sampling an output of the amplifier and generating a digital signal;
(g) a memory (50) storing an output of the analog to digital converter; wherein the processor is configured to:
calculate a flow of milk in the conduit using one or more output samples of the analogue to digital converter;
**characterized in that** in the use the processor is further configured to:
calculate an average of the n most recent output values from the analog to digital converter, where n is an integer;
calculate the amplifier gain that would bring the average of the last n output values into a predetermined range when the calculated time average not in the predetermined range; and
adjust the amplifier gain to the calculated gain.

4. A method for determining a flow rate of milk collected at a milking installation, the milking installation comprising:
(a) a conduit (6);
(b) a first electrode (30) and a second electrode (32), the first and second electrodes being disposed in an interior lumen of the conduit, and spaced apart in the lumen;
(c) a power supply (34) providing a voltage across the first and second electrodes;
(d) an electric current meter (38) determining an electrical current between the first and second electrodes, the electric current being indicative of a volume of milk in the conduit between the first and second electrodes;
(e) an amplifier (42) having a selectable gain amplifying an output of the electric current meter;
(f) an analogue to digital converter (46) sampling an output of the amplifier and generating a digital signal;
(g) a memory (50) storing an output of the analog to digital converter; and
wherein the method comprises:
calculating a flow of milk in the conduit using one or more output samples of the analogue to digital converter;
**characterized in that** the method further comprises:
calculating an average of the n most recent output values from the analog to digital converter, where n is an integer;
calculating the amplifier gain that would bring the average of the last n output values into a predetermined range when the calculated time average not in the predetermined range; and
adjusting the amplifier gain to the calculated gain.

5. A computer program comprising computer program code means for performing all the steps of Claim 4 when said program is run on a computer.

6. A computer program as claimed in Claim 5 embodied on a computer readable medium.

## Patentansprüche

1. System zum Bestimmen einer Strömungsrate von Milch, die an einer Melkanlage gesammelt wird, umfassend:
(a) eine Leitung (6);
(b) eine erste Elektrode (30) und eine zweite Elektrode (32), wobei die ersten und zweiten Elektroden in einem inneren Lumen der Leitung angeordnet sind und in dem Lumen voneinander beabstandet sind;
(c) eine Stromversorgung (34), die eine Spannung über die ersten und zweiten Elektroden bereitstellt;
(d) eine Messeinrichtung (38) für elektrischen Strom, die einen elektrischen Strom zwischen den ersten und zweiten Elektroden bestimmt, wobei der elektrische Strom ein Milchvolumen in der Leitung zwischen den ersten und zweiten Elektroden anzeigt;
(e) einen Verstärker (42) mit einer wählbaren Verstärkung, der einen Ausgang der Messeinrichtung für elektrischen Strom verstärkt;
(f) einen Analog-Digital-Wandler (46), der einen Ausgang des Verstärkers abtastet und ein digitales Signal erzeugt;
(g) einen Speicher (50), der einen Ausgang des Analog-Digital-Wandlers speichert; und
(h) einen Prozessor (52), der dazu ausgebildet ist:
einen Milchfluss in der Leitung unter Verwendung einer oder mehrerer Ausgangs-Abtastungen des Analog-Digital-Wandlers zu berechnen;
**dadurch gekennzeichnet, dass** der Prozessor weiterhin dazu ausgebildet ist:
einen Mittelwert der n neuesten Ausgangswerte aus dem Analog-Digital-Wandler zu berechnen, wobei n eine Ganzzahl ist;
die Verstärkung des Verstärkers zu berechnen, die den Mittelwert der letzten n Ausgangswerte in einen vorbestimmten Bereich bringen würde, wenn der berechnete zeitliche Mittelwert nicht in dem vorbestimmten Bereich liegt; und
die Verstärkung des Verstärkers auf die berechnete Verstärkung einzustellen.

2. System gemäß Anspruch 1, wobei der Prozessor weiterhin dazu ausgebildet ist, einen kumulativen Volumenfluss in der Leitung unter Verwendung eines oder mehrerer der berechneten Flüsse zu berechnen.

3. Verwendung eines Prozessors in einem System zum Bestimmen einer Strömungsrate von Milch, die an einer Melkanlage gesammelt wird, wobei die Melkanlage umfasst:
(a) eine Leitung (6);
(b) eine erste Elektrode (30) und eine zweite Elektrode (32), wobei die ersten und zweiten Elektroden in einem inneren Lumen der Leitung angeordnet sind und in dem Lumen voneinander beabstandet sind;
(c) eine Stromversorgung (34), die eine Spannung über die ersten und zweiten Elektroden bereitstellt;
(d) eine Messeinrichtung (38) für elektrischen Strom, die einen elektrischen Strom zwischen den ersten und zweiten Elektroden bestimmt, wobei der elektrische Strom ein Milchvolumen in der Leitung zwischen den ersten und zweiten Elektroden anzeigt;
(e) einen Verstärker (42) mit einer wählbaren Verstärkung, der einen Ausgang der Messeinrichtung für elektrischen Strom verstärkt;
(f) einen Analog-Digital-Wandter (46), der einen Ausgang des Verstärkers abtastet und ein digitales Signal erzeugt;
(g) einen Speicher (50), der einen Ausgang des Analog-Digital-Wandlers speichert; und wobei der Prozessor dazu ausgebildet ist:
einen Milchfluss in der Leitung unter Verwendung einer oder mehrerer Ausgangs-Abtastungen des Analog-Digital-Wandlers zu berechnen;
**dadurch gekennzeichnet, dass** der Prozessor in Verwendung weiterhin dazu ausgebildet ist:
einen Mittelwert der n neuesten Ausgangswerte aus dem Analog-Digital-Wandler zu berechnen, wobei n eine Ganzzahl ist;
die Verstärkung des Verstärkers zu berechnen, die den Mittelwert der letzten n Ausgangswerte in einen vorbestimmten Bereich bringen würde, wenn der berechnete zeitliche Mittelwert nicht in dem vorbestimmten Bereich liegt; und
die Verstärkung des Verstärkers auf die berechnete Verstärkung einzustellen.

4. Verfahren zum Bestimmen einer Strömungsrate von Milch, die an einer Melkanlage gesammelt wird, wobei die Melkanlage umfasst:
(a) eine Leitung (6);
(b) eine erste Elektrode (30) und eine zweite Elektrode (32), wobei die ersten und zweiten Elektroden in einem inneren Lumen der Leitung angeordnet sind und in dem Lumen voneinander beabstandet sind;
(c) eine Stromversorgung (34), die eine Spannung über die ersten und zweiten Elektroden bereitstellt;
(d) eine Messeinrichtung (38) für elektrischen Strom, die einen elektrischen Strom zwischen den ersten und zweiten Elektroden bestimmt, wobei der elektrische Strom ein Milchvolumen in der Leitung zwischen den ersten und zweiten Elektroden anzeigt;
(e) einen Verstärker (42) mit einer wählbaren Verstärkung, der einen Ausgang der Messeinrichtung für elektrischen Strom verstärkt;
(f) einen Analog-Digital-Wandler (46), der einen Ausgang des Verstärkers abtastet und ein digitales Signal erzeugt;
(g) einen Speicher (50), der einen Ausgang des Analog-Digital-Wandlers speichert; und wobei das Verfahren umfasst:
Berechnen eines Milchflusses in der Leitung unter Verwendung einer oder mehrerer Ausgangs-Abtastungen des Analog-Digital-Wandlers;
**dadurch gekennzeichnet, dass** das Verfahren weiterhin umfasst:
Berechnen eines Mittelwertes der n neuesten Ausgangswerte aus dem Analog-Digital-Wandler, wobei n eine Ganzzahl ist;
Berechnen der Verstärkung des Verstärkers, die den Mittelwert der letzten n Ausgangswerte in einen vorbestimmten Bereich bringen würde, wenn der berechnete zeitliche Mittelwert nicht in dem vorbestimmten Bereich liegt; und
Einstellen der Verstärkung des Verstärkers auf die berechnete Verstärkung.

5. Computerprogramm, das Computerprogrammcodemittel zum Durchführen aller Schritte aus Anspruch 4, wenn das Programm auf einem Computer ausgeführt wird, umfasst.

6. Computerprogramm gemäß Anspruch 5, das auf einem computerlesbaren Medium enthalten ist.

## Revendications

1. Système de détermination d'un débit de lait collecté dans une installation de traite, comprenant :
(a) un conduit (6) ;
(b) une première électrode (30) et une seconde électrode (32), les première et seconde électrodes étant disposées dans un lumen intérieur du conduit, et placées à l'écart dans le lumen ;
(c) une alimentation électrique (34) fournissant une tension à travers les première et seconde électrodes ;
(d) une ailette hydrométrique électrique (38) déterminant un courant électrique entre les première et seconde électrodes, le courant électrique étant indicateur d'un volume de lait dans le conduit entre les première et seconde électrodes ;
(e) un amplificateur (42) ayant un degré sélectionnable amplifiant une puissance finale de l'ailette hydrométrique électrique ;
(f) un convertisseur analogue à numérique (46) explorant une puissance finale de l'amplificateur et générant un signal numérique ;
(g) une mémoire (50) stockant une puissance finale du convertisseur analogue à numérique ; et
(h) un processeur (52) configuré pour :
calculer un débit de lait dans le conduit en utilisant un ou plusieurs échantillons de puissance finale du convertisseur analogue à numérique ;
**caractérisé en ce que** le processeur est configuré par ailleurs pour :
calculer une moyenne des valeurs de puissance finale n les plus récentes en provenance du convertisseur analogue à numérique, où n est un nombre entier ;
calculer le degré d'amplificateur qui amènerait la moyenne des dernières valeurs de puissance finale n à un niveau prédéterminé lorsque la moyenne de temps calculée (25) n'est pas au niveau prédéterminé ; et
ajuster le degré d'amplificateur au degré calculé.

2. Système selon la revendication 1 dans laquelle le processeur est configuré par ailleurs pour calculer un débit volumétrique cumulatif dans le conduit en utilisant un ou plusieurs des débits calculés.

3. Utilisation d'un processeur dans un système de détermination d'un débit de lait collecté dans une installation de traite, l'installation de traite comprenant :
(a) un conduit (6) ;
(b) une première électrode (30) et une seconde électrode (32), les première et seconde électrodes étant disposées dans un lumen intérieur du conduit, et placées à l'écart dans le lumen ;
(c) une alimentation électrique (34) fournissant une tension à travers les première et seconde électrodes ;
(d) une ailette hydrométrique électrique (38) déterminant un courant électrique entre les première et seconde électrodes, le courant électrique étant indicateur d'un volume de lait dans le conduit entre les première et seconde électrodes ;
(e) un amplificateur (42) ayant un degré sélectionnable amplifiant une puissance finale de l'ailette hydrométrique électrique ;
(f) un convertisseur analogue à numérique (46) explorant une puissance finale de f amplificateur et générant un signal numérique ;
(g) une mémoire (50) stockant une puissance finale du convertisseur analogue à numérique ;
dans laquelle le processeur est configuré pour :
calculer un débit de lait dans le conduit en utilisant un ou plusieurs échantillons de puissance finale du convertisseur analogue à numérique ;
**caractérisée en ce que** l'utilisation du processeur est configurée par ailleurs pour :
calculer une moyenne des valeurs de puissance finale n les plus récentes en provenance du convertisseur analogue à numérique, où n est un nombre entier ;
calculer le degré d'amplificateur qui amènerait la moyenne des dernières valeurs de puissance finale n à un niveau prédéterminé lorsque la moyenne de temps calculée n'est pas au niveau prédéterminé ; et
ajuster le degré d'amplificateur au degré calculé.

4. Méthode de détermination d'un débit de lait collecté dans une installation de traite, l'installation de traite comprenant :
(a) un conduit (6) ;
(b) une première électrode (30) et une seconde électrode (32), les première et seconde électrodes étant disposées dans un lumen intérieur du conduit, et placées à l'écart dans le lumen ;
(c) une alimentation électrique (34) fournissant une tension à travers les première et seconde électrodes ;
(d) une ailette hydrométrique électrique (38) déterminant un courant électrique entre les première et seconde électrodes, le courant électrique étant indicateur d'un volume de lait dans le conduit entre les première et seconde électrodes ;
(e) un amplificateur (42) ayant un degré sélectionnable amplifiant une puissance finale de l'ailette hydrométrique électrique ;
(f) un convertisseur analogue à numérique (46) explorant une puissance finale de l'amplificateur et générant un signal numérique ;
(g) une mémoire (50) stockant une puissance finale du convertisseur analogue à numérique ; et dans lequel la méthode comprend :
le calcul d'un débit de lait dans le conduit en utilisant un ou plusieurs échantillons de puissance finale du convertisseur analogue à numérique ;
**caractérisée en ce que** la méthode comprend par ailleurs :
le calcul d'une moyenne des valeurs de puissance finale n les plus récentes en provenance du convertisseur analogue à numérique, où n est un nombre entier ;
le calcul du degré d'amplificateur qui amènerait la moyenne des dernières valeurs de puissance finale n à un niveau prédéterminé lorsque la moyenne de temps calculée n'est pas au niveau prédéterminé ; et
l'ajustage du degré d'amplificateur au degré calculé.

5. Programme informatique comprenant des moyens de codage du programme informatique afin d'exécuter toutes les étapes de la revendicarion 4 lorsque ledit programme fonctionne sur un ordinateur.

6. Programme informatique selon la revendicarion 5 et mis en oeuvre sur un format lisible par informatique.
